# EUROPÄISCHE PATENTSCHRIFT

(11) **EP 1 677 894 B1**
(45) Veröffentlichungstag und Bekanntmachung des Hinweises auf die Patenterteilung: **15.08.2007**
(21) Anmeldenummer: 04818107.7
(22) Anmeldetag: 26.10.2004
(51) Int. Cl.: B01D 46/04

(54) **STAUBFILTER**
DUST FILTER
FILTRE A POUSSIERE

(30) Priorität: 27.10.2003 DE 10350228
(43) Veröffentlichungstag der Anmeldung: 12.07.2006
(73) Patentinhaber: Intensiv-Filter GmbH & Co KG, D-42555 Velbert - Langenberg (DE)
(72) Erfinder: KNEBEL, Bettina, 45529 Hattingen (DE)
(74) Vertreter: Christophersen, Ulrich Rudolf
(86) Internationale Anmeldenummer: PCT/DE2004/002378
(87) Internationale Veröffentlichungsnummer: WO 2005/044423

(56) Entgegenhaltungen:
- WO-A-03/086581
- DE-U- 20 000 648
- US-A- 6 149 716

## Beschreibung

Die Erfindung betrifft ein Staubfilter mit einem einen oberhalb angeordneten Reingasraum von einem unterhalb angeordneten Staubgasraum unterteilenden Trennboden, sowie mit vertikal angeordneten, langgestreckten Rohrfiltern, deren obere Enden offen und deren untere Enden verschlossen sind, wobei die Rohrfilter mit ihren oberen Enden jeweils in Öffnungen des Trennbodens eingesetzt sind und sich in den Staubgasraum hinein erstrecken, und wobei in dem offenen Ende jedes Rohrfilters ein Klemmelement angeordnet ist, welches zwischen sich und dem Rand der Öffnung das Filtermaterial des Rohrfilters einklemmt.

Eine solche Befestigung von Rohrfiltern von industriellen Entstaubungsanlagen ist z. B. aus der deutschen Gebrauchsmusterschrift G 91 11 939 bekannt. Zur Fixierung des Rohrfilters in der dafür vorgesehenen Öffnung ist in das offene Ende des Rohrfilters eine den Strömungskanal des Rohrfilters umgebende Klemmbuchse eingesetzt. Diese erzeugt eine radial nach außen wirkende Klemmkraft, wodurch das Filtermaterial des Rohrfilters zwischen der Klemmbuchse und dem Rand der das Rohrfilter umgebenden Öffnung eingeklemmt wird.

Ein grundsätzliches Problem bei gattungsgemäßen Staubfiltern besteht in der Ableitung von Flüssigkeit, welche sich auf der Oberseite des den Reingasraum von dem Staubgasraum unterteilenden Trennbodens ansammelt. Die Flüssigkeit ist häufig Reinigungsflüssigkeit, da zur Einhaltung der heute geforderten hygienischen Bedingungen der Reingasraum einer regelmäßigen Flüssigkeitspülung zu unterziehen ist. Es erfordert einen relativ hohen baulichen Aufwand, die nach einem solchen Spülvorgang auf der Oberseite des Trennbodens verbleibende Flüssigkeit abzuleiten.

Der Erfindung liegt die **Aufgabe** zugrunde, bei einem Staubfilter der gattungsgemäßen Art die Ableitung der sich auf dem Trennboden ansammelnden Flüssigkeit zu vereinfachen.

Zur **Lösung** wird bei einem Staubfilter mit den eingangs angegebenen Merkmalen vorgeschlagen, daß das Klemmelement mit über seinen Umfang verteilten radialen Durchlässen versehen ist, und daß die oberen Ränder der radialen Durchlässe höher liegen als die Oberseite des Trennbodens.

Mit dieser technischen Lehre wird eine deutlich vereinfachte Ableitung der sich auf dem Trennboden ansammelnden Flüssigkeit erzielt. Diese kann im Bereich der Befestigung der Rohrfilter abströmen, wozu das Klemmelement, welches zwischen sich und dem Rand der Öffnung das Filtermaterial einklemmt, mit über seinen Umfang verteilten radialen Durchlässen versehen ist, wobei die oberen Ränder dieser Durchlässe höher liegen als die Oberseite des Trennbodens. Die Flüssigkeit kann daher über die Durchlässe nach unten abströmen. Das die Durchlässe umgebende Filtermaterial stellt hierbei keine Barriere dar, da es aufgrund seiner Porösität ausreichend flüssigkeitsdurchlässig ist. Gesonderte Maßnahmen zur Abführung der sich auf dem Trennboden ansammelnden Flüssigkeit, wie z. B. in den Trennboden eingearbeitete Dränagevorrichtungen oder eine Neigung des gesamten Trennbodens, sind entbehrlich, weshalb mit der Erfindung eine baulich besonders einfache Methode zur Abführung der Flüssigkeit erreicht wird.

Gemäß einer Ausführungsform wird vorgeschlagen, daß das Klemmelement ein Ring ist, und daß die radialen Durchlässe gleichmäßig über den Umfang des Rings verteilte Öffnungen im Material des Rings sind. Vorzugsweise handelt es sich bei den Öffnungen um rechteckige Schlitze in dem Material des Rings. Dies ermöglicht, selbst wenn die oberen Ränder dieser Schlitze nur geringfügig höher liegen als die Oberseite des Trennbodens, einen ausreichenden Durchtrittsquerschnitt für die auf dem Trennboden angesammelte Flüssigkeit.

Mit einer Ausgestaltung wird vorgeschlagen, daß der als Klemmelement dienende Ring in Höhe des Trennbodens eine nach innen gewölbte, umlaufende Hohlkehle aufweist, und daß sich die Öffnungen zumindest über einen Teil der Höhe der Hohlkehle erstrecken. Die Hohlkehle ermöglicht eine formschlüssige Festlegung des Rings innerhalb der Öffnung des Trennbodens unter sicherer Einklemmung des Filtermaterials.

Zur Erzielung eines ausreichenden Formschlusses ist es ferner von Vorteil, wenn der Ring ober- und unterhalb seines die Hohlkehle aufweisenden Axialabschnitts im wesentlichen zylindrische Axialabschnitte aufweist, und der Übergang von der Hohlkehle auf den oberen zylindrischen Axialabschnitt höher liegt als die Oberseite des Trennbodens.

Eine weitere Ausgestaltung ist gekennzeichnet durch einen in dem Rohrfilter angeordneten, aus Vertikalstäben und waagerechten Stäben oder Drähten zusammengesetzten Stützkorb, der sich über die Enden zumindest eines Teils der Vertikalstäbe auf der Oberseite des Trennbodens abstützt. Auf diese Weise wird eine exakte senkrechte Positionierung des Stützkorbes und damit des Rohrfilters erzielt.

Gemäß einer anderen Ausführungsform der Erfindung dient als Klemmelement ein in Umfangsrichtung wellenförmig gestalteter Ring, wobei die ebenfalls wellenförmige Unterseite des Rings die radialen Durchlässe bildet, über die die auf der Oberseite des Trennbodens angesammelte Flüssigkeit zunächst nach innen und dann nach unten abströmen kann. Auch diese Ausführungsform vermeidet gesonderte Maßnahmen zur Abführung der sich auf dem Trennboden ansammelnden Flüssigkeit, wie z.B. in den Trennboden eingearbeitete Drainagevorrichtungen oder eine Neigung des gesamten Trennbodens.

Ferner wird vorgeschlagen, daß sich der Ring auf der Oberkante des Randes der Öffnung im Trennboden unter Einklemmung des Filtermaterials abstützt.

Eine weitere Ausgestaltung ist gekennzeichnet durch einen auf den Wellenbergen des Rings, an dem die radialen Durchlässe ausgebildet sind, angeordneten Zusatzring. Das so gebildete Ringpaar zeichnet sich durch eine insgesamt höhere Steifigkeit und Festigkeit bei zugleich geringem Materialeinsatz aus. Als Material kommt sowohl für den wellenförmigen Ring wie auch für den Zusatzring einfacher Draht bzw. ein wellenförmig gebogener Draht in Betracht.

Mit einer weiteren Ausgestaltung wird vorgeschlagen, daß bezüglich des Stützkorbes Vertikalstäbe einer ersten Gruppe sowohl an dem Ring wie an dem Zusatzring befestigt sind, während Vertikalstäbe einer zweiten Gruppe nur bis zu dem Ring reichen, und nur an diesem befestigt sind. Von weiterem Vorteil bei dieser Ausgestaltung ist, wenn sich der Stützkorb mit den Enden der Vertikalstäbe der zweiten Gruppe auf der Oberseite des Trennbodens abstützt, um so den Stützkorb insgesamt in eine exakte vertikale Lage und Ausrichtung zu bringen.

Eine weitere Ausgestaltung ist gekennzeichnet durch einen das offene Ende des Rohrfilters umgebenden und sich auf der Oberseite des Trennbodens abstützenden Filzring. Vorzugsweise ist der Filzring bei der Montage bereits fest mit dem textilen Schlauchmaterial des Rohrfilters verbunden.

Ferner vorgeschlagen wird ein von oben auf dem Rohrfilter abgestützter Niederhalter mit daran ausgebildeten Armen, wobei die freien Enden der Arme an von den Rohrfiltern räumlich getrennten Filter-Waschelementen oder deren Waschmittelzuleitungen verriegelbar sind. Auf diese Weise wird auf das Rohrfilter eine gut dosierbare Axialkraft ausgeübt, wodurch die Rohrfilter in den Öffnungen des Trennbodens gehalten werden. Die Verriegelung erfolgt in besonders einfacher Weise unter Verwendung von ohnehin in dem Staubfilter vorhandenen Anschlusselementen, nämlich den räumlich getrennt von den einzelnen Rohrfiltern angeordneten Filter-Waschelementen bzw. deren Waschmittelzuleitungen. Einzelheiten zu der Funktion und Anordnung solcher Filter-Waschelemente sind z.B. in der EP 0 719 577 B1 beschrieben.

Weitere Vorteile und Einzelheiten des erfindungsgemäßen Staubfilters werden nachfolgend anhand eines Ausführungsbeispiels und unter Bezugnahme auf die Zeichnungen erläutert. Darin zeigen:
- Fig. 1: in einer Übersichtsdarstellung ein Staubfilter für industrielle Anwendungen mit einer Vielzahl darin eingesetzter Rohrfilter;
- Fig. 2: in einer Detailansicht den horizontalen Trennboden des Staubfilters mit einem darin eingesetzten Rohrfilter einer ersten Ausführungsform, wobei von diesem Rohrfilter ausschließlich dessen oberes Ende dargestellt ist;
- Fig. 3: das in der Fig. 2 mit III bezeichnete Detail der Befestigung des Rohrfilters in dem Trennboden, allerdings abweichend von Fig. 2 in einer Schnittdarstellung;
- Fig. 4: ein Klemmelement in Einzeldarstellung;
- Fig. 5: eine in etwa der Fig. 2 entsprechende Ansicht des oberen Endes eines in einen Trennboden eingesetzten Rohrfilters in einer zweiten Ausführungsform;
- Fig. 5a: In einer teilweise geschnittenen Darstellung einen stark vergrößerten Ausschnitt der in Fig. 5 bezeichneten Einzelheit Va;
- Fig. 6: eine Teilansicht gemäß dem in Fig. 5a bezeichneten Ansichtspfeil VI;
- Fig. 7: eine der Fig. 5 entsprechende Ansicht mit zusätzlicher Darstellung von Filter-Waschelementen sowie deren Waschmittelzuleitungen auf der Oberseite des Trennbodens;
- Fig. 8: In einer Draufsicht eine Darstellung eines Niederhalters;
- Fig. 9a: Eine Draufsicht auf Rohrfilter, Filter-Waschelemente sowie den Niederhalter zur Erläuterung der Montage und Positionierung des Niederhalters und
- Fig. 9b: Die Gegenstände nach Fig. 9a nach Abschluss der Montage des Niederhalters.

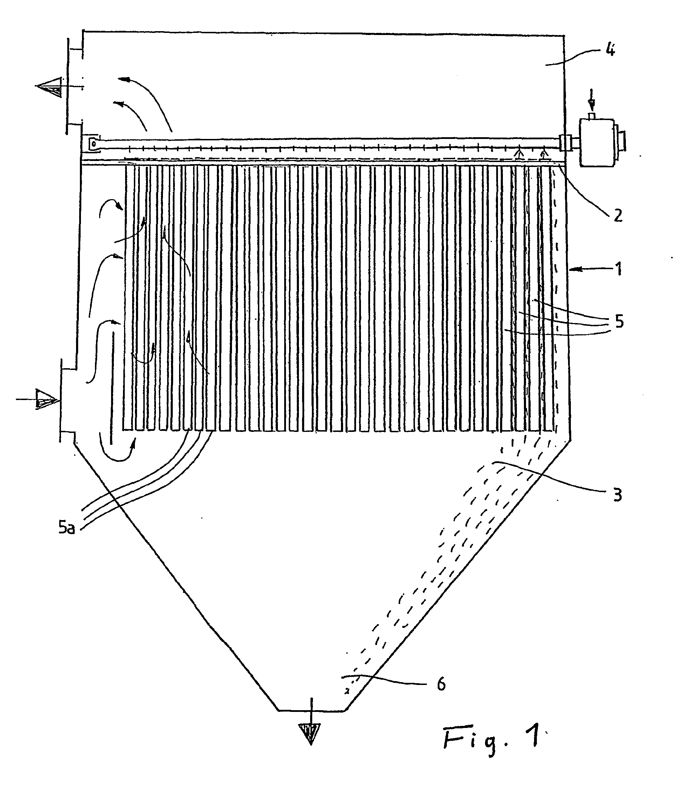

Fig. 1 zeigt in einer Übersichtsdarstellung ein Staubfilter für industrielle Anwendungen. Dieses besteht aus einem vertikal ausgerichteten, vorzugsweise zylindrischen Gehäuse 1, welches durch einen horizontal angeordneten Trennboden 2 in einen unten liegenden Staubgasraum 3 höheren Innendrucks und einen oben liegenden Reingasraum 4 niedrigeren Innendrucks unterteilt ist. Der Trennboden 2 ist nach Art eines Rohrbodens gestaltet und verfügt über eine Mehrzahl von vorzugsweise kreisrunden Öffnungen für darin eingesetzte, langgestreckte Filterelemente. Vorzugsweise ist der Rohrboden 2 eine ebene Stahlplatte, vorzugsweise aus Edelstahl. Bei den gleichmäßig über den Trennboden 2 verteilten Filterelementen handelt es sich um Rohrfilter 5, deren untere Rohrenden bei 5a verschlossen sind, wohingegen die oberen Enden der Rohrfilter zwecks Durchströmung offen sind. Die Rohrfilter 5 sind von oben her in die Öffnungen in dem Trennboden 2 eingehängt, wobei sie sich in diesen Öffnungen abstützen. Die wirksame Filterfläche wird durch die Mantelfläche der zylindrisch gestalteten Filterelemente gebildet. Es können auch mehrere Filterelemente so zueinander angeordnet sein, daß sie eine Gruppe bzw. ein Filterbündel bilden.

Zum Reinigen und damit Regenerieren der einzelnen Rohrfilter 5 befinden sich oberhalb ihrer Öffnungen Druckluftquellen eines Druck-Impuls-Injektorsystems. Kurzzeitig wird auf diese Weise ein starker Luftstrahl von oben her in die Rohrfilter 5 abgegeben, so daß diese von dem an ihren Außenflächen ausfiltrierten Staub oder dem staubhaltigen Produkt gereinigt werden.

Innerhalb des Reingasraumes 4 sind außerdem Wascheinrichtungen angeordnet, die zwecks Reinigung des Reingasraumes mit geeigneten Spülflüssigkeiten betrieben werden. Diese Flüssigkeit sammelt sich anschließend auf der Oberseite des Trennbodens 2, und kann von dort in nachfolgend noch näher beschriebener Weise abgeführt werden. Ferner kann das Staubfilter über Filter-Wascheinrichtungen zur Reinigung der Filterelemente verfügen. Eine derartige Filter-Wascheinrichtung ist z.B. in der EP 0 719 577 B1 im einzelnen beschrieben.

Das Material der schlauchförmigen Rohrfilter 5 ist gasdurchlässig, jedoch von so feiner Porosität, daß sich die Staubpartikel an der Außenfläche fangen. Für diesen Einsatzzweck bekannt sind z. B. Polyesterfliese. In jedem der Rohrfilter 5 befindet sich ein aus senkrechten und waagerechten Stäben oder Drähten zusammengesetzter Stützkorb. Der Stützkorb gibt dem schlauchförmigen Rohrfilter Formstabilität bei gleichzeitiger Aufrechterhaltung einer ausreichend großen Durchtrittsfläche für das Gas.

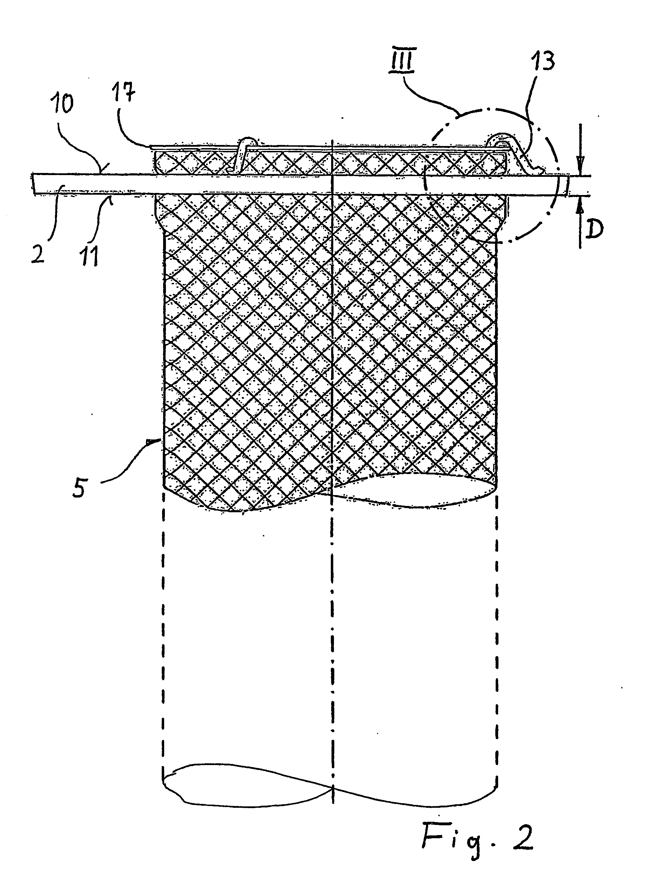

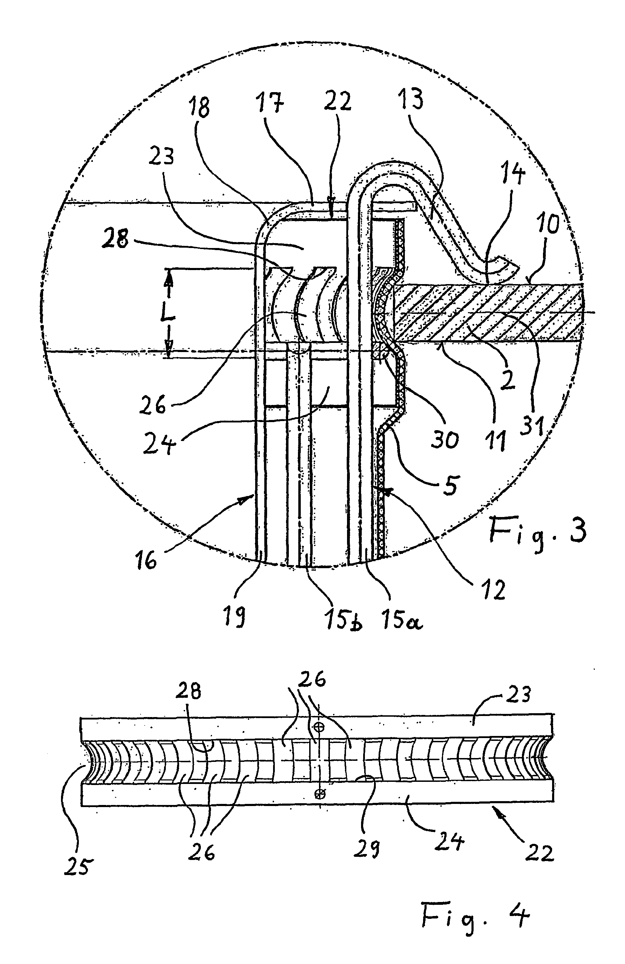

Fig. 2 zeigt das obere Ende eines der Rohrfilter einschließlich jenes Bereiches des Trennbodens, in welchem das betreffende Rohrfilter sitzt. Einzelheiten der Befestigung des Rohrfilters in der Öffnung des Trennbodens läßt noch besser Fig. 3 erkennen, bei der es sich um eine detaillierte Schnittdarstellung handelt. Zu erkennen ist, daß die runde Öffnung in dem Trennboden 2 im wesentlichen scharfkantig ist, d. h. die Wandung der Öffnung geht rechtwinklig sowohl in die Oberseite 10, wie auch in die Unterseite 11 des Trennbodens 2 über. Der in dem Rohrfilter 5 angeordnete Stützkorb 12 stützt sich mit seinem unteren Ende gegen das verschlossene Filterschlauchende 5a ab und ragt mit dem oberen Ende 13 des vertikalen Drahtes 15a aus dem Rohrfilter 5 heraus. Dieses obere Ende 13 ist so umgebogen, daß es sich bei 14 auf der Oberseite 10 des Trennbodens 2 abstützt und hierdurch das Rohrfilter senkrecht fixiert. Hierdurch wird auch eine Erdung des aus vertikalen Drähten 15a, 15b und in regelmäßigen Abständen angeordneten horizontalen Drähten zusammengesetzten Stützkorbes 12 gegen elektrostatische Aufladung erzielt.

Zur Unterstützung des Druck-Impuls-Injektorsystems ist ferner eine Einlaufdüse 16 vorhanden, bestehend aus einem horizontalen Flansch 17, welcher über eine sanfte Rundung 18 in eine in das Rohrfilter 5 hinein führende Hülse 19 übergeht. Vorzugsweise ist die Einlaufdüse 16 in geeigneter Weise oben an dem Stützkorb 12 fixiert, etwa durch eine Bajonettsicherung.

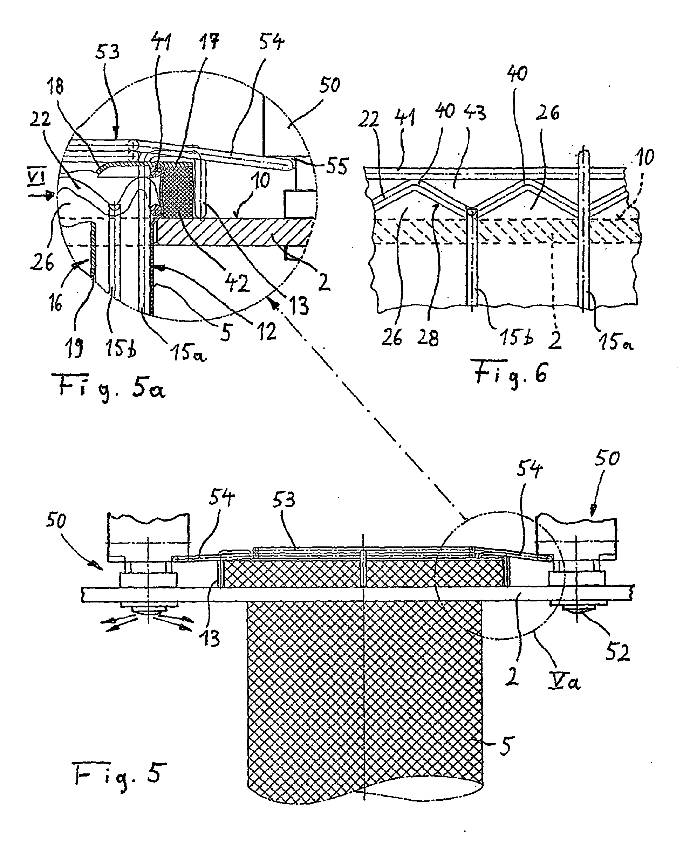

Zur axialen Lagesicherung des Rohrfilters 5 in Bezug auf die Öffnung in dem Trennboden 2 ist in das offene Ende des Rohrfilters ein den Strömungskanal in dem Rohrfilter umgebendes Klemmelement 22 eingesetzt. Beim Ausführungsbeispiel nach den Fign. 2 bis 4 ist das Klemmelement 22 ein Ring aus z.B. Edelstahl. Als Einzelteil ist dieser Ring 22 in Fig. 4 dargestellt. Durch den Ring 22, welcher sich auf Höhe des Trennbodens 2 befindet, wird jener Abschnitt des Rohrfilters, welcher sich zwischen der Außenseite des Rings 22 und dem Rand der Öffnung in dem Trennboden befindet, eingeklemmt bzw. eingespannt. Die hierfür erforderliche, radial nach außen wirkende Kraft wird bei dem dargestellten Ausführungsbeispiel durch den Ring selbst erzeugt. Dieser läßt sich elastisch zusammendrücken bzw. federt er kräftig nach außen auf. Durch diese Federwirkung wird der Ring 22 unter Zwischenlage und Kompression des Materials des Rohrfilters kräftig nach außen in Richtung zu der Wandung in dem Trennboden 2 gedrückt.

Einzelheiten in der Gestaltung des als Spannelement dienenden Rings sind den Fign. 3 und 4 zu entnehmen. Der Ring 22 weist u. a. eine nach innen hin mit einem Radius gewölbte, umlaufende Hohlkehle 25 auf. Im Bereich dieser Hohlkehle 25 ist der Ring außerdem mit einer Vielzahl radialer Durchlässe 26 versehen. Diese verteilen sich gleichmäßig über den Umfang des Rings und sind jeweils von länglich-rechteckiger Gestalt. Dies läßt am besten Fig. 4 erkennen. Vorzugsweise erstrecken sich die rechteckigen radialen Durchlässe 26 auch nur über die in Fig. 3 eingezeichnete axiale Länge L der Hohlkehle 25. Hingegen reichen die Durchlässe bzw. Öffnungen 26 nicht bis in den Bereich des oberen und des unteren zylindrischen Axialabschnitts 23 bzw. 24.

Von großer Bedeutung ist bei dem Ausführungsbeispiel nach den Fign. 2 bis 4 die gegenseitige Zuordnung von Ring 22 und Trennboden 2. Diese ist dergestalt, daß sich in montiertem Zustand die Hohlkehle 25 des Rings 22 auf Höhe des Trennbodens 2 befindet, so daß die Hohlkehle 25 einschließlich des dazwischen eingeklemmten Filtermaterials an den rechtwinkligen Kanten der Öffnung in dem Trennboden 2 anliegt. Infolge dieser Positionierung liegt der an dem Ring 22 ausgebildete Übergang von der Hohlkehle 25 auf den oberen zylindrischen Axialabschnitt 23 höher, als die Oberseite 10 des Trennbodens 2. Umgekehrt liegt der Übergang von der Hohlkehle 25 auf den unteren zylindrischen Axialabschnitt 24 tiefer, als die Unterseite 11 des Trennbodens 2. Diese Anordnung führt zu einer formschlüssigen Verriegelung des Klemmelements 22 in der Öffnung des Trennbodens sowie zu einer sehr hohen Klemmkraft auf das zwischen Ring und Trennboden angespannte Flies- oder Fasermaterial des schlauchförmigen Rohrfilters.

Fig. 3 läßt insbesondere erkennen, daß die beim Ausführungsbeispiel rechteckig gestalteten Öffnungen 26 in Bezug auf den Trennboden 2 so angeordnet sind, daß die oberen Ränder 28 dieser Durchlässe höher liegen, als die Oberseite 10 des Trennbodens 2. Da demgemäß Öffnungsquerschnitte zum Teil oberhalb des Trennbodens liegen, kann Flüssigkeit, die sich auf dem Trennboden angesammelt hat, durch die Öffnungen 26 radial nach innen hindurchströmen, und dann nach unten abfließen. Das Faser- oder Fliesmaterial des Rohrfilterschlauches stellt insoweit kein Hindernis dar, da das Schlauchmaterial zwar Festpartikel zurückhält, nicht jedoch Flüssigkeit. Von den Öffnungen 26 aus kann die hindurchgetretene Flüssigkeit dann nach unten in das Rohrfilter 5 hinabfließen und dann im Bereich des unteren Endes des Rohrfilters in den Staubgasraum 3 austreten.

Auch die unteren Ränder 29 der Öffnungen 26 erstrecken sich soweit nach unten, daß diese tiefer liegen, als die Unterseite 11 des Trennbodens 2. Mit anderen Worten: Die Öffnungen 26 erstrecken sich von oberhalb des Trennbodens 2 bis hinab auf mindestens das Niveau der Oberseite 10 des Trennbodens 2.

Eine radial nach außen gerichtete Druckbeaufschlagung des Rings 22 wird durch einen horizontalen Draht 30 des Stützkorbes 12 erreicht. Dieser Draht 30 und damit der Ort der Druckausübung auf den Ring 22 liegt unterhalb der Mittelebene 31 des Trennbodens 2 und damit auch unterhalb der Mittelebene der Hohlkehle 25. Da der Stützkorb 12 radial elastisch federt, ergibt sich auf diese Weise eine formschlüssige Verriegelung des Stützkorbes unter der Hohlkehle 25 des Rings 22.

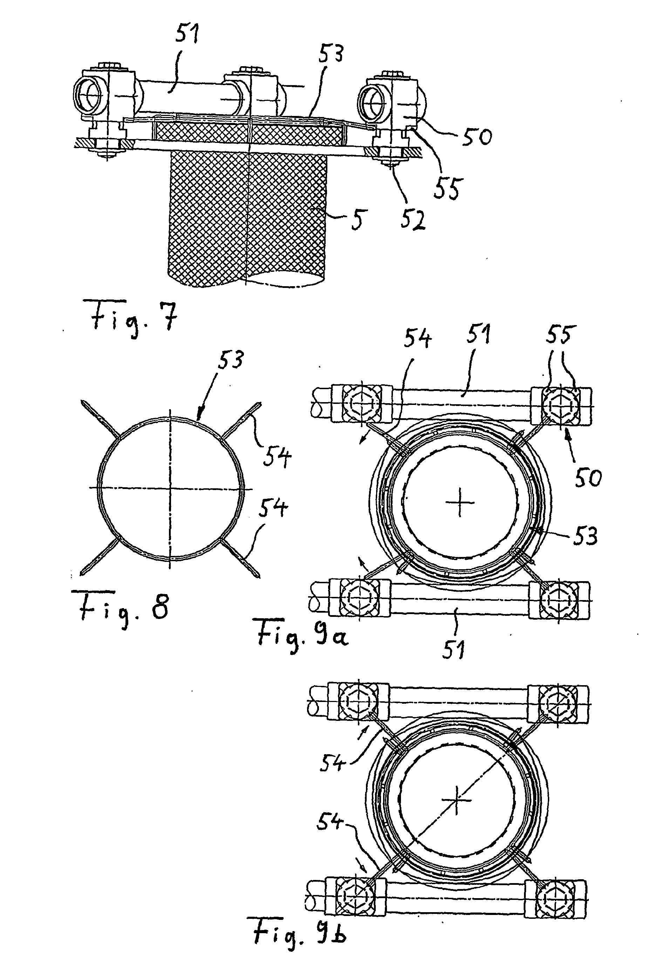

In den Fign. 5, 5a und 6 ist eine zweite Ausführungsform dargestellt. Für funktionsgleiche Teile werden hierbei dieselben Bezugszeichen verwendet.

Als Klemmelement, welches zwischen sich und dem Rand der Öffnung des Trennbodens 2 das Filtermaterial einklemmt, dient in diesem Fall der wellenförmig gestaltete Ring 22. Dieser besteht aus einem wellenförmig gebogenen Draht des Stützkorbes. Über dem als Klemmelement dienenden Ring 22 befindet sich, auf dessen Wellenbergen 40 angeordnet, ein Zusatzring 41 von kreisrunder Gestalt. Die kürzeren Vertikalstäbe 15b des Stützkorbes 12 reichen in diesem Fall nur bis zu dem wellenförmigen Ring 22, und enden an dessen Wellentälern. Dort sind sie verschweißt oder verlötet. Die längeren Vertikalstäbe 15a hingegen, von denen über den Umfang des Stützkorbes insgesamt vier Stück vorhanden sind, erstrecken sich, wie Fig. 5a erkennen läßt, noch über den Zusatzring 41 hinaus, und knicken dann zweimal um 90° ab, wodurch sich ihre Enden 13 wiederum auf der Oberseite 10 des Trennbodens 2 abstützen. Die längeren Vertikalstäbe 15a sind an den Kreuzungspunkten sowohl mit dem wellenförmigen Ring 22 wie auch mit dem Zusatzring 41 verlötet oder verschweißt.

Fig. 5a läßt ferner erkennen, daß das Schlauchmaterial des Rohrfilters 5 auf der Höhe der beiden Ringe 22, 41 von einem Filzring 42 umgeben ist. Der Filzring 42 ist fest mit dem Schlauchmaterial verbunden und er stützt sich auf der Oberseite 10 des Trennbodens 2 ab, wobei er sich noch innerhalb der umgebogenen freien Enden 13 der Vertikalstäbe 15a befindet.

Zugleich auf dem Zusatzring 41 wie dem Filzring 42 liegt auch bei diesem Ausführungsbeispiel wiederum der Flansch 17 der Einlaufdüse 16 auf. Diese erstreckt sich über die sanfte Rundung 18 hinab in das Rohrfilter und bildet dort den hülsenartigen Abschnitt 19. Aus Gründen der besseren Übersicht ist die Einlaufdüse 16 in Fig. 5a teilweise geschnitten dargestellt, um das dahinter angeordnete Klemmelement 22 besser zu erkennen.

Das Einklemmen des Filtermaterials erfolgt durch das Klemmelement 22, welches sich hierzu im Bereich der Oberkante des Randes der im Trennboden ausgebildeten Öffnung auf dem Filtermaterial abstützt. Diese Abstützung erfolgt daher nur punktweise in den Bereichen der Wellentäler des wellenförmigen Klemmelements 22. Sichergestellt ist aber auch in diesem Fall, daß die sich auf dem Trennboden 2 nach einem Waschvorgang ansammelnde Flüssigkeit vollständig abgeleitet wird. Die Flüssigkeit, für die das Filtermaterial des Rohrfilters nur einen geringen Widerstand darstellt, kann hierbei über die Durchlässe 26 (Fig. 6) nach innen abströmen. Diese Durchlässe 26 sind durch die ebenfalls wellenförmige Unterseite des Klemmelements 22 definiert und nach oben hin durch den Rand 28 begrenzt. Sie liegen so tief, daß die Flüssigkeit vollständig abströmen kann. Die Durchlässe 26 erstrecken sich also von oberhalb des Trennbodens 2 bis hinab auf das Niveau der Oberseite 10 des Trennbodens 2. Zur Erstdrainage tragen ferner die oberhalb des wellenförmigen Klemmelements 22 angeordneten weiteren Durchlässe 43 zwischen den beiden Ringen 22, 41 bei.

Gemäß Fig. 5 befinden sich in gewissem Abstand zu dem jeweiligen Rohrfilter 5 Filter-Waschelemente 50, die über Waschmittelzuleitungen 51 (in Fig. 7, 9a und 9b dargestellt) mit Waschmittel versorgt werden. An der Unterseite des Trennbodens 2 sind die Filter-Waschelemente 50 mit Waschdüsen 52 zur Verteilung der Waschflüssigkeit versehen.

Die Filter-Waschelemente werden gemäß den Darstellungen der Fign. 7 bis 9b dazu herangezogen, die Rohrfilter von oben her gegen den Trennboden 2 zu drücken und so zu fixieren. Hierzu dient ein von oben auf dem Rohrfilter 5 abgestützter Niederhalter 53 mit daran ausgebildeten federnden Armen 54. Die freien Enden dieser Arme 54 sind zur Seite hin biegsam und auf diese Weise an den Filter-Waschelementen 50 verriegelbar. Zu diesem Zweck ist das Gehäuse der Filter-Waschelemente 50 mit Ausnehmungen 55 versehen, in die die Arme 54 von unten her formschlüssig eingreifen, und auf diese Weise verriegelbar sind. Die Art der Befestigung des Niederhalters 53 und die Ausnutzung von dessen Flexibilität sind nacheinander in Fig. 9a und 9b dargestellt. Infolge seiner Flexibilität übt der vorzugsweise aus zwei Drähten geformte Niederhalter 53 eine nach unten gerichtete Kraft auf das Rohrfilter 5 aus, welche ausreichend ist, um das jeweilige Rohrfilter auch bei vollem Filterbetrieb sicher in dem Trennboden zu halten.

Die Abstützung der Gegenkraft erfolgt hierbei durch die freien Enden 13 der langen Vertikalstäbe 15b des Stützkorbes.

Bei der Ausführung nach den Fign. 7 bis 9b befinden sich um jedes Filterelement herum insgesamt vier Filter-Waschelemente 50. Entsprechend ist der Niederhalter 53 mit insgesamt vier Armen 54 versehen, so daß eine gleichmäßige und verkantungsfreie Druckverteilung erreicht wird.

### Bezugszeichenliste

- 1: Gehäuse
- 2: Trennboden
- 3: Staubgasraum
- 4: Reingasraum
- 5: Rohrfilter
- 5a: Rohrende
- 6: Staubaustritt
- 10: Oberseite
- 11: Unterseite
- 12: Stützkorb
- 13: Ende
- 14: Bezugslinie für Ort
- 15a: Vertikalstab oder Draht
- 15b: Vertikalstab oder Draht
- 16: Einlaufdüse
- 17: Flansch
- 18: Rundung
- 19: Hülse
- 22: Klemmelement, Ring
- 23: oberer Axialabschnitt
- 24: unterer Axialabschnitt
- 25: Hohlkehle
- 26: Öffnung, Durchlass
- 28: oberer Rand
- 29: unterer Rand
- 30: horizontaler Draht
- 31: Mittelebene
- 40: Wellenberg
- 41: Zusatzring
- 42: Filzring
- 43: Durchlass
- 50: Filter-Waschelement
- 51: Waschmittelzuleitung
- 52: Waschdüse
- 53: Niederhalter
- 54: Arm
- 55: Ausnehmung

- D: Dicke des Trennbodens
- L: Länge der Hohlkehle

## Patentansprüche

1. Staubfilter mit einem einen oberhalb angeordneten Reingasraum (4) von einem unterhalb angeordneten Staubgasraum (3) unterteilenden Trennboden (2), sowie mit vertikal angeordneten, langgestreckten Rohrfiltern (5), deren obere Enden offen und deren untere Enden (5a) verschlossen sind, wobei die Rohrfilter (5) mit ihren oberen Enden jeweils in Öffnungen des Trennbodens (2) eingesetzt sind und sich in den Staubgasraum (3) hinein erstrecken, und wobei in dem offenen Ende jedes Rohrfilters (5) ein Klemmelement (22) angeordnet ist, welches zwischen sich und dem Rand der Öffnung das Filtermaterial des Rohrfilters (5) einklemmt,
**dadurch gekennzeichnet,**
**daß** das Klemmelement (22) mit über seinen Umfang verteilten radialen Durchlässen (26) versehen ist, und daß die oberen Ränder (28) der radialen Durchlässe (26) höher liegen als die Oberseite (10) des Trennbodens (2).

2. Staubfilter nach Anspruch 1, **dadurch gekennzeichnet, daß** das Klemmelement ein Ring (22) ist, und daß die radialen Durchlässe (26) gleichmäßig über den Umfang des Rings (22) verteilte Öffnungen im Material des Rings (22) sind.

3. Staubfilter nach Anspruch 2, **dadurch gekennzeichnet, daß** die Öffnungen (26) rechteckige Schlitze sind.

4. Staubfilter nach Anspruch 2 oder Anspruch 3, **dadurch gekennzeichnet, daß** der Ring (22) in Höhe des Trennbodens (2) eine nach innen hin gewölbte, umlaufende Hohlkehle (25) aufweist, und daß sich die Öffnungen (26) zumindest über einen Teil der Höhe der Hohlkehle (25) erstrecken.

5. Staubfilter nach Anspruch 4, **dadurch gekennzeichnet, daß** der Ring (22) ober- und unterhalb seines die Hohlkehle (25) aufweisenden Axialabschnitts im wesentlichen zylindrische Axialabschnitte (23 bzw. 24) aufweist, und daß der Übergang von der Hohlkehle (25) auf den oberen zylindrischen Axialabschnitt (23) höher liegt als die Oberseite (10) des Trennbodens (2).

6. Staubfilter nach einem der Ansprüche 1 bis 5, **gekennzeichnet durch** einen in dem Rohrfilter (5) angeordneten, aus Vertikalstäben und waagerechten Stäben oder Drähten zusammengesetzten Stützkorb (12), der sich über die Enden (13) zumindest eines Teils (15a) der Vertikalstäbe (15a, 15b) auf der Oberseite (10) des Trennbodens (2) abstützt.

7. Staubfilter nach Anspruch 6, **dadurch gekennzeichnet, daß** sich der Stützkorb (12) mit mindestens einem Stab oder Draht von innen gegen das Klemmelement (22) abstützt.

8. Staubfilter nach einem der Ansprüche 1, 6 oder 7, **dadurch gekennzeichnet, daß** das Klemmelement ein in Umfangsrichtung wellenförmig gestalteter Ring (22) ist, und daß die ebenfalls wellenförmige Unterseite des Rings (22) die radialen Durchlässe (26) bildet.

9. Staubfilter nach Anspruch 8, **gekennzeichnet durch** einen wellenförmig gebogenen Draht als Ring (22).

10. Staubfilter nach Anspruch 8 oder 9, **dadurch gekennzeichnet, daß** sich der Ring (22) auf der Oberkante des Randes der Öffnung im Trennboden (2) unter Einklemmung des Filtermaterials abstützt.

11. Staubfilter nach einem der Ansprüche 8 bis 10, **gekennzeichnet durch** einen auf den Wellenbergen (40) des Rings (22) angeordneten Zusatzring (41).

12. Staubfilter nach Anspruch 11 in Verbindung mit Anspruch 6, **dadurch gekennzeichnet, daß** Vertikalstäbe (15a) einer ersten Gruppe sowohl an dem Ring (22) wie an dem Zusatzring (41) befestigt sind, während Vertikalstäbe (15b) einer zweiten Gruppe nur bis zu dem Ring (22) reichen, und an diesem befestigt sind.

13. Staubfilter nach Anspruch 12, **dadurch gekennzeichnet, daß** sich der Stützkorb (12) mit den Enden (13) der Vertikalstäbe (15a) der zweiten Gruppe auf der Oberseite (10) des Trennbodens (2) abstützt.

14. Staubfilter nach einem der vorangehenden Ansprüche, **gekennzeichnet durch** einen das offene Ende des Rohrfilters (5) umgebenden und sich auf der Oberseite (10) des Trennbodens (2) abstützenden Filzring (42).

15. Staubfilter nach einem der vorangehenden Ansprüche, **gekennzeichnet durch** einen von oben auf dem Rohrfilter (5) abgestützten Niederhalter (53) mit daran ausgebildeten Armen (54), wobei die freien Enden der Arme (54) an von den Rohrfiltern räumlich getrennten Filter-Waschelementen (50) oder deren Waschmittelzuleitungen (51) verriegelbar sind.

16. Staubfilter nach einem der vorangehenden Ansprüche, **dadurch gekennzeichnet, daß** sich die Durchlässe (26) bis auf das Niveau der Oberseite (10) des Trennbodens (2) hinab erstrecken.

## Claims

1. Dust filter with a partition (2) which separates a clean gas chamber (4) arranged at the top from a dust-contaminated gas chamber (3) arranged at the bottom, and with vertically arranged, elongate tubular filters (5), of which the upper ends are open and the lower ends (5a) are closed, wherein the tubular filters (5) are inserted with their upper ends in openings of the partition (2) and extend into the dust-contaminated gas chamber (3), and wherein a clamping element (22) is arranged in the open end of each tubular filter (5), which clamping element clamps the filter material of the tubular filter (5) between it and the edge of the opening, **characterised in that** the clamping element (22) is provided with radial apertures (26) distributed over its circumference, and **in that** the upper edges (28) of the radial apertures (26) are higher than the upper side (10) of the partition (2).

2. Dust filter according to claim 1, **characterised in that** the clamping element is a ring (22), and **in that** the radial apertures (26) are openings in the material of the ring (22) which are distributed uniformly over the circumference of the ring (22).

3. Dust filter according to claim 2, **characterised in that** the openings (26) are rectangular slots.

4. Dust filter according to claim 2 or claim 3, **characterised in that** the ring (22) has at the height of the partition (2) an inwardly curved peripheral hollow channel (25), and **in that** the openings (26) extend at least over part of the height of the hollow channel (25).

5. Dust filter according to claim 4, **characterised in that** the ring (22) has essentially cylindrical axial sections (23 and 24) above and below its axial section comprising the hollow channel (25), and **in that** the transition from the hollow channel (25) to the upper cylindrical axial section (23) is higher than the upper side (10) of the partition (2).

6. Dust filter according to one of claims 1 to 5, **characterised by** a support basket (12) composed of vertical bars and horizontal bars or wires which is arranged in the tubular filter (5) and is supported via the ends (13) of at least some (15a) of the vertical bars (15a, 15b) on the upper side (10) of the partition (2).

7. Dust filter according to claim 6, **characterised in that** the support basket (12) is supported by at least one bar or wire from inside against the clamping element (22).

8. Dust filter according to one of claims 1, 6 or 7, **characterised in that** the clamping element is a ring (22) which is of corrugated shape in the circumferential direction, and **in that** the likewise corrugated underside of the ring (22) forms the radial apertures (26).

9. Dust filter according to claim 8, **characterised by** a wire bent in a corrugated manner as the ring (22).

10. Dust filter according to claim 8 or 9, **characterised in that** the ring (22) is supported on the upper edge of the rim of the opening in the partition (2), thereby clamping the filter material.

11. Dust filter according to one of claims 8 to 10, **characterised by** an additional ring (41) arranged on the corrugation peaks (40) of the ring (22).

12. Dust filter according to claim 11 in conjunction with claim 6, **characterised in that** vertical bars (15a) of a first group are fixed both to the ring (22) and to the additional ring (41), while vertical bars (15b) of a second group extend only as far as the ring (22) and are fixed thereto.

13. Dust filter according to claim 12, **characterised in that** the support basket (12) is supported by the ends (13) of the vertical bars (15a) of the second group on the upper side (10) of the partition (2).

14. Dust filter according to one of the preceding claims, **characterised by** a felt ring (42) which surrounds the open end of the tubular filter (5) and is supported on the upper side (10) of the partition (2).

15. Dust filter according to one of the preceding claims, **characterised by** a holding-down device (53) which is supported on the tubular filter (5) from above and has arms (54) formed thereon, wherein the free ends of the arms (54) can be locked to filter washing elements (50) that are spatially separate from the tubular filters or to the washing medium supply lines (51) thereof.

16. Dust filter according to one of the preceding claims, **characterised in that** the apertures (26) extend downwards as far as the level of the upper side (10) of the partition (2).

## Revendications

1. Filtre à poussière avec un étage de séparation (2) séparant un espace pour gaz pur (4) agencé au-dessus et un espace pour gaz poussiéreux (3) agencé au-dessous, ainsi que de filtres tubulaires (5) allongés agencés verticalement dont les extrémités supérieures sont ouvertes et dont les extrémités inférieures (5a) sont fermées, les filtres tubulaires (5) étant installés avec leurs extrémités supérieures respectivement dans les ouvertures de l'étage de séparation (2) et s'étendant vers l'intérieur dans l'espace pour gaz poussiéreux (3) et un élément de fixation (22) étant agencé dans l'extrémité ouverte de chaque filtre tubulaire (5), lequel élément se fixe entre lui-même et le bord de l'ouverture du matériau filtrant du filtre tubulaire (5), **caractérisé en ce que** l'élément de fixation (22) est doté de passages radiaux (26) répartis sur sa circonférence et **en ce que** les bords supérieurs (28) des passages radiaux (26) sont disposés plus haut que le côté supérieur (10) de l'étage de séparation (2).

2. Filtre à poussière selon la revendication 1, **caractérisé en ce que** l'élément de fixation est un anneau (22) et **en ce que** les passages radiaux (26) sont des ouvertures pratiquées dans le matériau de l'anneau (22) réparties régulièrement sur la circonférence de l'anneau (22).

3. Filtre à poussière selon la revendication 2, **caractérisé en ce que** les ouvertures (26) sont des fentes rectangulaires.

4. Filtre à poussière selon la revendication 2 ou la revendication 3, **caractérisé en ce que** l'anneau (22) présente sur la hauteur de l'étage de séparation (2) une gorge (25) circulaire et incurvée vers l'intérieur et **en ce que** les ouvertures (26) s'étendent au moins sur une partie de la hauteur de la gorge (25).

5. Filtre à poussière selon la revendication 4, **caractérisé en ce que** l'anneau (22) présente des segments axiaux (23 et 24) sensiblement cylindriques au-dessus et au-dessous de son segment axial présentant la gorge (25) et **en ce que** la jonction de la gorge (25) et du segment axial cylindrique supérieur (23) se situe plus haut que le côté supérieur (10) de l'étage de séparation (2).

6. Filtre à poussière selon l'une des revendications 1 à 5, **caractérisé par** un panier de support (12) composé de tiges verticales et de tiges ou de fils métalliques horizontaux agencé dans le filtre tubulaire (5), panier qui supporte par les extrémités (13) au moins une partie (15a) des tiges verticales (15a, 15b) sur le côté supérieur (10) de l'étage de séparation (2).

7. Filtre à poussière selon la revendication 6, **caractérisé en ce que** le panier de support (12) s'appuie avec au moins une tige ou un fil métallique depuis l'intérieur contre l'élément de fixation (22).

8. Filtre à poussière selon l'une des revendications 1, 6 ou 7, **caractérisé en ce que** l'élément de fixation est un anneau (22) de configuration ondulée sur sa circonférence et **en ce que** le côté inférieur également ondulé de l'anneau (22) forme les passages radiaux (26).

9. Filtre à poussière selon la revendication 8, **caractérisé par** un fil métallique plié de façon ondulée en tant qu'anneau (22).

10. Filtre à poussière selon la revendication 8 ou 9, **caractérisé en ce que** l'anneau (22) s'appuie sur l'angle supérieur du bord de l'ouverture dans l'étage de séparation (2) lors du coincement du matériau filtrant.

11. Filtre à poussière selon l'une des revendications 8 à 10, **caractérisé par** un anneau supplémentaire (41) agencé sur les sommets (40) de l'anneau (22).

12. Filtre à poussière selon la revendication 11 lorsqu'elle dépend de la revendication 6, **caractérisé en ce que** les tiges verticales (15a) d'un premier groupe sont fixées aussi bien sur l'anneau (22) que sur l'anneau supplémentaire (41) tandis que les tiges verticales (15b) d'un second groupe ne s'étendent que vers l'anneau (22) et sont fixées à celui-ci.

13. Filtre à poussière selon la revendication 12, **caractérisé en ce que** le panier de support (12) s'appuie avec les extrémités (13) des tiges verticales (15a) du second groupe sur le côté supérieur (10) de l'étage de séparation (2).

14. Filtre à poussière selon l'une des revendications précédentes, **caractérisé par** un anneau en feutre (42) entourant l'extrémité ouverte du filtre tubulaire (5) et s'appuyant sur le côté supérieur (10) de l'étage de séparation (2).

15. Filtre à poussière selon l'une des revendications précédentes, **caractérisé par** un élément de retenue (53) qui s'appuie par le dessus sur le filtre tubulaire (5) et qui est doté de bras qui sont formés sur celui-ci, les extrémités libres des bras (54) pouvant être bloquées sur des éléments de lavage (50) du filtre spatialement séparés des filtres tubulaires ou sur leurs conduits d'alimentation en agents lavants (51).

16. Filtre à poussière selon l'une des revendications précédentes, **caractérisé en ce que** les passages (26) s'étendent vers le bas jusqu'au niveau du côté supérieur (10) de l'étage de séparation (2).
